# EUROPEAN PATENT SPECIFICATION

(11) **EP 0 832 931 B1**
(45) Date of publication and mention of the grant of the patent: **05.12.2001**
(21) Application number: 97202914.4
(22) Date of filing: 23.09.1997
(51) Int. Cl.: C08L 53/02, C08L 55/02, C08L 51/02

(54) **Thermoplastic elastomer composition with good overmoulding adhesion**
Thermoplastische Elastomerzusammensetzung mit guter Übergussadhäsion
Composition élastomère thermoplastique avec une bonne adhésion bonne au surmoulage

(30) Priority: 26.09.1996 US 721644
(43) Date of publication of application: 01.04.1998
(73) Proprietor: SHELL INTERNATIONALE RESEARCH MAATSCHAPPIJ B.V., 2596 HR Den Haag (NL)
(72) Inventor: Modic, Michael John, Houston, Texas 77077 (US)
(74) Representative: Kortekaas, Marcellinus C. J. A.

(56) References cited:
- EP-A- 0 048 388
- EP-A- 0 791 631
- GB-A- 2 288 177

## Description

This invention relates to a thermoplastic elastomer composition with good overmolding adhesion. In particular, this invention relates to a thermoplastic elastomer composition with good adhesion to polar substrates such as polycarbonate or acrylonitrile-butadiene-styrene (ABS).

Although elastomeric block copolymers are known to be compatible with polyolefins, their use on polar matrices/substrates, such as polycarbonate or ABS, has been limited due to poor compatibility between the block copolymer and the substrate. In particular, it is desirable in many instances to mold a soft rubber material directly onto a hard substrate, thus providing a soft cover. However, the use of many attractive soft, rubbery elastomers is limited due to incompatibility between the elastomer and the substrate. The rubber coating will not adhere well to the substrate and sloughs off with use. It would be desirable to have a soft, rubbery thermoplastic elastomeric composition that will adhere to hard (polar) substrates such as polycarbonates and ABS.

Such composition has now surprisingly been found. Therefore, the present invention relates to a thermoplastic elastomer composition comprising:
a hydrogenated elastomeric block copolymer having at least two resinous endblocks of polymerized monovinyl aromatic compound and an elastomeric midblock of polymerized conjugated diene, wherein the weight average molecular weight of the block copolymer is at least 50,000 as determined by gel permeation chromatography, calibrated with polystyrene standards;
a plasticizer; and
an ethylene-propylene-diene monomer rubber grafted with styrene-acrylonitrile.

Applicants have found that the combination of an ethylene-propylene-diene monomer rubber (EPDM) which has been grafted with styrene-acrylonitrile (SAN) and a hydrogenated elastomeric block copolymer yields a thermoplastic elastomer composition with adhesion characteristics, especially to polar substrates such as polar polymers, i.e. those polymers being more polar than polyolefins.

EP 0791631A1, which is prior art pursuant to Art. 54(3) EPC for Contracting States DE, ES, FR, GB and IT, described an elastomer composition that comprises:
(a) a vinyl aromatic-conjugated diene block copolymer; and
(b) at least 5 weight percent, based on the total weight of the elastomer composition, of a high rubber graft copolymer, wherein said graft copolymer comprises:
   (i) from 60 percent by weight to 95 percent by weight of a rubbery polymeric substrate having a glass transition temperature of less than 0 °C and comprising repeating units derived from one or more monoethylenically unsaturated monomers; and
   (ii) from 5 percent by weight to 40 percent by weight of a rigid polymeric superstrate having a glass transition temperature of greater than or equal to 0 °C and comprising repeating units derived from one or more monomers selected from the group consisting of (C₁-C₁₂) alkyl (meth) acrylate monomers, vinyl aromatic monomers and monoethylenically unsaturated nitrile monomers, wherein at least a portion of the rigid polymeric superstrate is grafted to the rubbery polymeric substrate.

The elastomeric block copolymers suitable for use herein are known in the art, as disclosed for instance in U.S. 5,194,530. The elastomeric block copolymers have at least two resinous endblocks of polymerized monovinyl aromatic compound, thus giving a resinous segment, and an elastomeric midblock of polymerized conjugated diene, thus giving an elastomeric segment. The block copolymers can be linear, such as A-B-A or (A-B)ₙX, or radial such as (A-B)ₚX. In these formulae A stands for a polymerised monovinyl aromatic block; B stands for a polymerised conjugated diene block; X stands for a coupling agent; n is 2 and p is more than 2, preferably from 3 to 20, more preferably from 3 to 6.

Suitable monovinyl aromatic compounds include those having 8 to 20 carbon atoms as exemplified by styrene and styrene homologs such as alpha-methylstyrene and paramethylstyrene. Styrene is especially preferred.

Suitable conjugated dienes include those having 4 to 8 carbon atoms. Illustrative of such conjugated dienes are 1,3-butadiene (butadiene), 2-methyl-1,3-butadiene (isoprene), 1-3-pentadiene (piperylene), 1,3-octadiene, and 2-methyl-1,3-pentadiene. Preferred conjugated dienes are butadiene and isoprene, most preferably butadiene. The conjugated diene blocks may also be formed of two or more different conjugated diene monomers.

The weight average molecular weight of the block copolymer is at least 50,000. For linear polymers, the weight average molecular weight will generally be within the range of 50,000 to 500,000. Actually, the upper limit is dictated by viscosity considerations and can be as high as can be tolerated and still be processable. The most preferred weight average molecular weight for linear copolymers is 50,000 to 185,000. With radial polymers, the weight average molecular weight can be much higher since these polymers have a lower viscosity for a given total molecular weight. Thus, for radial polymers the weight average molecular weight generally will be in the range of 50,000 to 1 million, preferably 100,000 to 500,000.

Preferably, the resinous endblocks comprise polymerized styrene and elastomeric midblock comprises polymerized 1,3-butadiene hydrogenated to remove the aliphatic unsaturation.

Preferably, the hydrogenated elastomeric block copolymer has a weight average molecular weight in the range from 50,000 to 500,000.

Preferably, the thermoplastic elastomer composition comprises:
32 to 65 weight percent of the hydrogenated elastomeric block copolymer.
20 to 45 weight percent of the plasticizer
5 to 20 weight percent of the grafted ethylene-propylene-diene monomer rubber.

It may be desired to use a blend of different block copolymers such as a blend of a first and a second block copolymer wherein the first block copolymer is, preferably, linear and has a weight average molecular weight in the range from 50,000 to 180,000, preferably less than 175,000, and the second block copolymer has a weight average molecular weight that is higher than the weight average molecular weight of the first block copolymer. The second block copolymer preferably has a weight average molecular weight of at least 100,000, preferably 100,000 to 500,000, more preferably at least 175,000 to 300,000, even more preferably from more than 180,000 to 300,000. Preferably, the second block copolymer is linear.

When used herein in reference to linear or block copolymers, the term "molecular weight" is the weight average molecular weight as determined by gel permeation chromatography (GPC) where the GPC system has been appropriately calibrated with polystyrene standards. The polymer in anionically polymerized linear polymers is essentially monodispersed and it is both convenient and adequately descriptive to report the peak molecular weight of the narrow molecular weight distribution observed. Such methods are well known and described in patents including U.S. 5,229,464. Since styrene (as polystyrene) is used as the calibration standard, the measurement directly gives the absolute molecular weight of the styrene endblocks. Knowing the molecular weight and percentage of styrene present, the absolute molecular weight of the midblock segment can be calculated. The molecular weight is measured on an aliquot which is removed after the first step of the polymerization and then terminated to deactivate the initiator.

It is not as straightforward to measure the true molecular weight of a final coupled star or radial copolymer by using GPC. The star-shaped molecules do not separate and pass through the packed GPC columns in the same manner as do the linear polymers used for the calibration. Hence, the time of arrival at a UV or refractive index detector is not a good direct indicator of the molecular weight. Therefore, instead of GPC, light scattering techniques may be used to measure the weight average molecular weight of a star copolymer. The sample is dissolved in a suitable solvent to a concentration of less than 1 gram of sample per 100 milliliters of solvent and then filtered directly into the light scattering cell using a syringe and porous membrane filters of less than 0.5 µm (micron) pore size. The light scattering measurements are performed as a function of scattering angle and of polymer concentration using standard procedures. The differential refractive index (DRI) of the sample is measured at the same wave length and in the same solvent used for the light scattering. This results in a molecular weight value which approximates the weight average molecular weight of the radial copolymer.

For the purposes of this specification, molecular weight values and ranges referred to herein are weight average molecular weight values and ranges.

The elastomeric block copolymers utilized in this invention are hydrogenated to such a degree that the unsaturation of the elastomeric block is greatly reduced without significant change in unsaturation of the resinous block component. Generally, at least 90 percent of the unsaturation in the diene midblock is hydrogenated and no more than 25 percent, preferably less than 10 percent, of the aromatic unsaturation is hydrogenated. Such hydrogenation techniques are known in the art and disclosed, for instance, in US Reissue 27,145. Since the block copolymers utilized in this invention are hydrogenated to remove the aliphatic unsaturation, they can be viewed as S-EB-S polymers, or (S-EB) _{(n or p)}X as the case may be, where the S refers to the monovinyl aromatic, generally styrene, endblocks and the EB represents ethylene/butylene, which is the structure resulting from the hydrogenation of polymerized 1,3-butadiene, and n, p, and X are as hereinbefore described.

The composition of this invention contains in addition a SAN-grafted EPDM which is compatible both with the elastomeric block copolymer and a hard substrate such as polycarbonate or ABS. Examples of SAN grafted-EPDM which have been found to work well in the compositions of the invention are ROYALTUF 372P20 and ROYALTUF 372C (ROYALTUF is a trademark). ROYALTUF 372P20 is an ethylene/propylene/nonconjugated diene (EPDM) elastomer grafted with SAN resin. The EPDM is present as a finely dispersed phase in the continuous SAN, although intense processing in a twin screw extruder can lead to phase inversion. ROYALTUF 372P20 is approximately 50/50 SAN/EPDM, with a specific gravity of 0.98 and a melt index of 20 g/10 min. at 265°C, 21600g load. ROYALTUF 372C is similar to ROYALTUF 372P20 except it is raw crumb from the reactor. The SAN is present as a dispersed phase in the continuous EPDM. ROYALTUF 372C has a melt index of less than 0.01g/10 min. at 265°C, 21600g load. ROYALTUF 372P20 is preferred due to ease of mixing and degree of dispersion in compounds.

A (midblock) plasticizer is included in the composition of the invention. The plasticizer used is typically an oil which is compatible with the elastomeric mid-block segment of the elastomeric block copolymer and which does not tend to go into the aromatic endblock portions to any significant degree. Thus, the oils can be viewed as paraffinic. Paraffinic oils which may be used in the elastomeric composition should be capable of being melt processed with other components of the elastomeric composition without degrading. Particularly important is the ability of the final composition to be melt extruded. An excellent oil is a white mineral oil sold as DRAKEOL 34, available from the Pennreco Division of the Pennzoil Company (DRAKEOL is a trademark). DRAKEOL 34 has a specific gravity of 0.864-0.878 at 51°C, a flashpoint of 238°C, and a viscosity of 370-420 SUS at 38°C (0.8-0.9 cm²/sec). Suitable vegetable oils and animal oils or their derivatives may also be used as the plasticizer. Other suitable oils include hydrogenated materials, i.e. hydrogenated naphthenics. Materials which are initially aromatic in nature should be hydrogenated to the point where they exhibit no significant levels of aromatic unsaturation or at most, very low levels, typically not more than 5% wt.

A flow promoter, or end block resin, may also be added. A flow promoter provides better "wet-out" of the thermoplastic elastomer and thus, better contact between the elastomer and the substrate, leading to improved adhesion. Preferably, the flow improver is a styrenic resin, more preferably predominantly (i.e. more than 50% by weight) an α-methylstyrene resin. An example of a flow promoter which has produced good results is KRISTALEX 1120 (KRISTALEX is a trademark). KRISTALEX 1120 is a water-white, low-molecular-weight, thermoplastic hydrocarbon resin derived predominantly from α-methylstyrene. KRISTALEX 1120 has a specific gravity of 1.07 at 25/25°C, a flashpoint of 236°C, and a viscosity of 50 cm²/sec (stokes) at 25°C. Flow promoter additions of 3 to 10 weight percent have provided good results.

The thermoplastic elastomer composition may further comprise an olefinic polymer. Typically, the olefinic polymer is compatible with at least one block of the block copolymer.

A preferred olefinic polymer is polypropylene. If present, the olefinic polymer typically comprises up to 20% by weight of the composition, preferably up to 15% by weight, more preferably 3 to 15% by weight, in particular 5 to 10% by weight.

Thus, the composition of this invention comprises the hydrogenated elastomeric block copolymer, the SAN-grafted EPDM, and the (midblock) plasticizer. A preferred mix is 25 to 45 weight percent, preferably 35 to 45 weight percent block copolymer, 35 to 45 weight percent plasticizer (in particular oil), and 5 to 20 weight percent, preferably 6-18 weight percent more preferably 10 to 18 weight percent SAN-grafted EPDM, all percentages based upon the total weight of the combined additives. Polypropylene may be added, preferably at 3 to 15 weight percent, more preferably 5 to 10 weight percent. A flow promoter such as KRISTALEX 1120 may also be added, preferably at 3 to 10 weight percent.

Generally, no crosslinking agents are used in the composition. This, of course, does not exclude the presence of materials such as stabilizers which are used for the normal purpose of stabilization. Examples of suitable stabilizers are disclosed in U.S. 4,835,200. Particularly preferred are hindered phenols, particularly less volatile hindered phenols such as tetrakis [methylene (3,5-di-tert-butyl-4-hydrooxyhydrocinnamate)] methane sold by Ciba Geigy under the tradename IRGANOX 1010 alone or in combination with a thiosynergist such as DLTDP (dilaurylthiodipropionate). Stabilizers are typically present in an amount from 0.1 to 5% by weight, preferably 0.5 to 25 % by weight.

The thermoplastic elastomer compositions may be prepared according to procedures in general known to those skilled in the art.

It is preferred that first the block copolymer and the plasticizer are mixed prior to blending with the other component(s) to prepare the thermoplastic elastomer composition according to the invention.

The invention is particularly useful for direct overmolding onto polar matrix/substrate materials such as polycarbonate or ABS. Potential uses include automotive instrument panels, knobs, buttons, pen/pencil grips, cellular phones, toothbrushes, handles, and tool grips. The composition may also be co-extruded, co-extrusion blowmolded, double-injection molded, insert molded, or sandwich molded. It is believed that overmolding onto a warm substrate and/or aging are helpful in improving adhesion.

According to a further aspect, the present invention relates to a process for the preparation of an overmoulded polar polymer shape which comprises extruding the thermoplastic elastomer composition according to the invention to form an extrudate; forming a shape comprising a polar polymer; and molding the extrudate onto the polar polymer to form an overmoulded polar polymer shape.

The extrudate is injected and moulded onto a warm polar polymer shape according to procedures known to those skilled in the art. Alternatively, the extrudate may be co-extruded with the polar polymer.

According to yet another aspect, the present invention relates to an overmoulded polar polymer shape comprising a first layer containing a polar polymer and a second layer overmoulded onto the first layer containing the thermoplastic elastomeric composition according to the invention as well as to articles containing the overmoulded polar polymer shape. If desired, the overmoulded polar polymer shape may be subjected to an ageing treatment, to improve adhesion.

The invention is further illustrated with the following examples

### Examples

Sixteen test compositions having varying amounts of block copolymer, oil, SAN-grafted EPDM, polypropylene, and flow promoter were prepared. First the block copolymer (in crumb form) and oil were mixed together either by hand or with a mixer. Once the oil was absorbed by the crumb, the remaining ingredients were added and the entire mixture was tumble-mixed. The mixture was then added to an extrusion hopper and feed to a co-rotating, intermeshing twin screw extruder. The mixture was extruded at 300 rpm and a melt temperature of 230°C to 240°C. The extrudate was formed into pellets by strand cutting.

The injection molding machine used to make overmolding adhesion specimens was equipped with an insert mold which had the ability to mold two different thickness plaques. First, the desired substrate material (e.g., polycarbonate, ABS) was molded into 0.32 cm (0.125 inch) thick plaques. The insert mold was then modified to allow molding of a thicker plaque. A strip of masking tape was laid across one end of the premolded plaque parallel to the molding direction. The premolded substrate plaque was then placed back into the insert mold and the run composition was injected into the mold cavity, forming an approximately 0.25 cm (0.100 inch) thick covering over the substrate material.

The overmolded plaque was then cut perpendicular to the direction of flow into 2.54 cm (1 inch) wide strips for a 90° peel adhesion test. The area where the masking tape was placed on the plaque acted as a site for gripping the compound portion of the overmolded plaque during testing.

Testing was conducted per ASTM D-903 with modifications made for specimen size (1" x 6" (2.54 x 15.24 cm) as opposed to 1" x 8" (2.54 x 20.32 cm)) and test speed (2 inches/minute 5.08 cm/min). Tests were conducted on an INSTRON (trademark) testing machine at ambient temperature (approximately 75°F - 78°F (23.9-25.6°C). The initial peel and average peel were measured. The initial peel was measured at the point where the curve on the adhesion test curve suddenly changed slope due to the beginning of the peel. The average peel was the average of the substantially horizontal slope during the majority of the peel.

### Example 1

A first set of test runs were conducted on compositions having the same copolymer with varied additions of SAN-grafted EPDM and polypropylene. The test run compositions and results of the adhesion tests are given in Table 1.

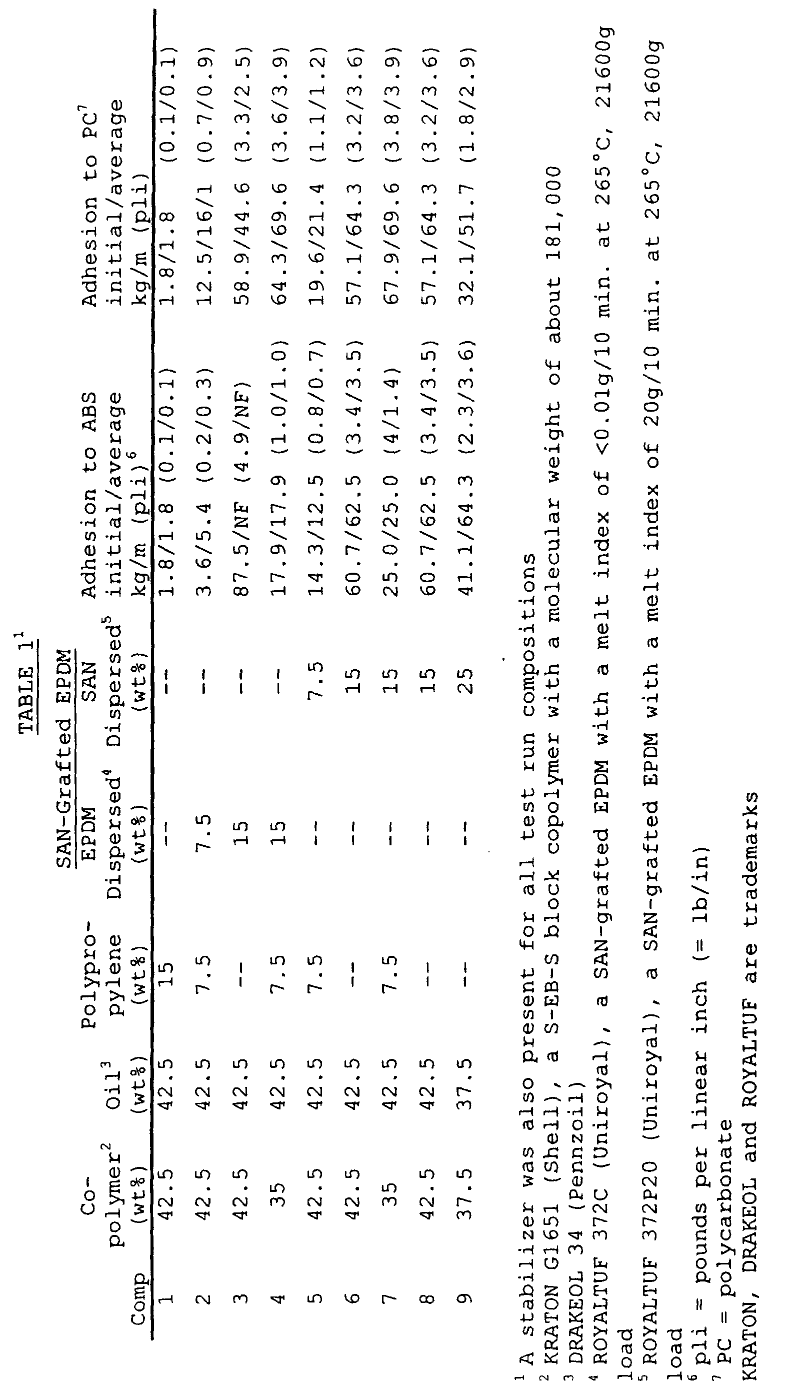

It can be seen that significantly improved adhesion is obtained with the addition of a SAN-grafted EPDM (Compositions 2-9). It can also be seen that as the level of SAN-grafted EPDM is increased beyond 15 wt%, no further significant improvement in adhesion to either ABS or polycarbonate is achieved (Compositions 6, 8 and 9).

### Example 2

A second set of tests were conducted on compositions having varied types of copolymer, including mixtures of two copolymers. The test run compositions and results of the adhesion tests are given in Table 2.

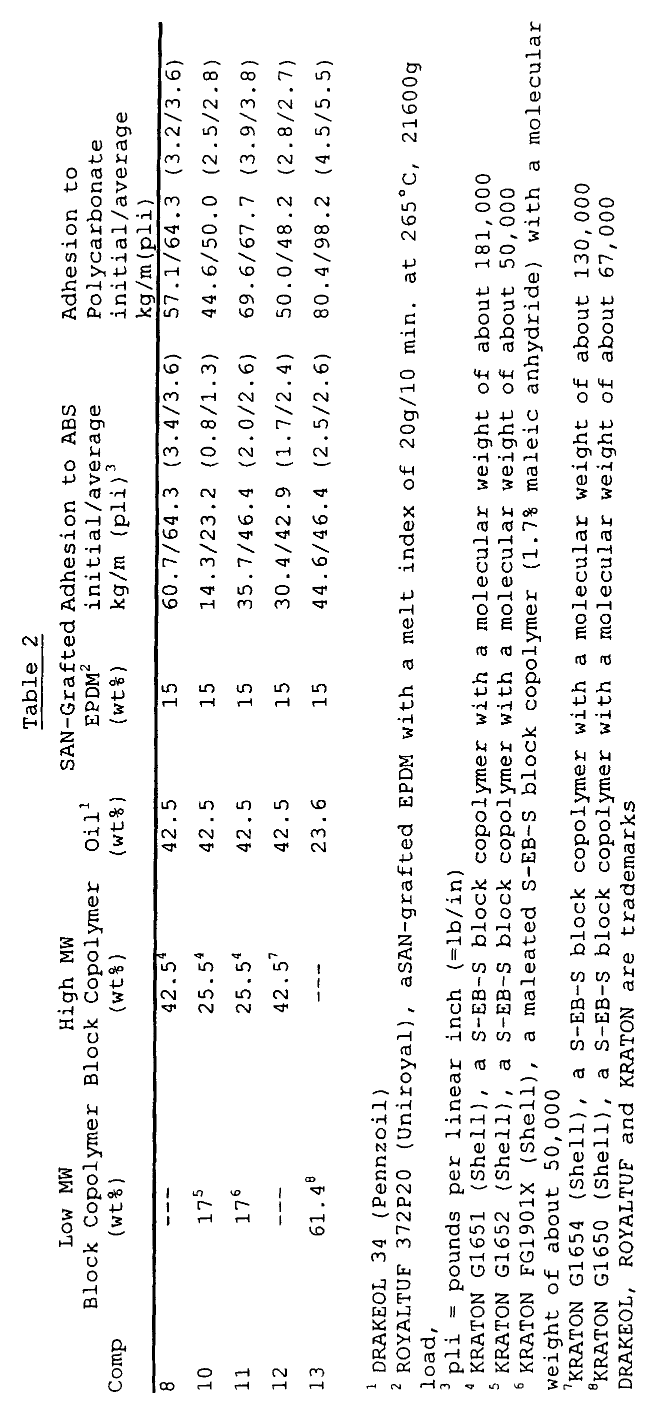

It can be seen that a variety of hydrogenated styrene-butadiene copolymers and mixtures of block copolymers can be used to produce compounds that show good adhesion to ABS and polycarbonate.

### Example 3

A third set of test runs were conducted on compositions which included a flow promoter. The test run compositions and results of the adhesion tests are given in Table 3.

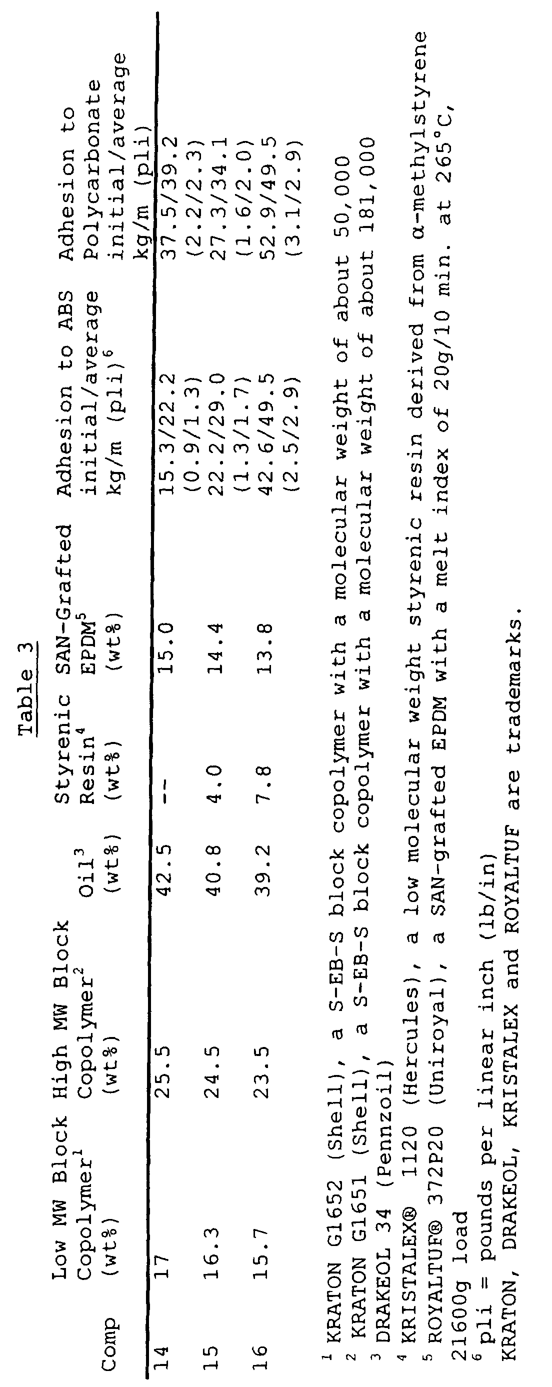

As the amount of flow promoter increases, the flow of the thermoplastic elastomer increases (Compositions 14, 15, and 16 had melt flow indices of 0.12, 0.18, and 0.83 g/10 min. at 230/2.16 kg load, respectively). The flow improvement can be seen to improve the adhesion to the substrates.

## Claims

1. A thermoplastic elastomer composition having good overmoulding adhesion to polar substrates comprising:
a hydrogenated elastomeric block copolymer having at least two resinous endblocks of polymerized monovinyl aromatic compound and an elastomeric midblock of polymerized conjugated diene, wherein the weight average molecular weight of the block copolymer is at least 50,000 as determined with gel permeation chromatography, calibrated with polystyrene standards; a plasticizer; and
an ethylene-propylene-diene monomer rubber grafted with styrene-acrylonitrile.

2. Thermoplastic elastomer composition according to claim 1 wherein said resinous endblocks comprise polymerized styrene and said elastomeric midblock comprises polymerized 1,3-butadiene hydrogenated to remove the aliphatic unsaturation.

3. Thermoplastic elastomer composition according to claim 1 or 2, wherein the hydrogenated elastomeric block copolymer has a weight average molecular weight in the range from 50,000 to 500,000.

4. Thermoplastic elastomer composition according to any one of the preceding claims comprising
32 to 65 weight percent of the hydrogenated elastomeric block copolymer.
20 to 45 weight percent of the plasticizer
5 to 20 weight percent of the grafted ethylene-propylene-diene monomer rubber.

5. Thermoplastic elastomer composition according to any one of the preceding claims further comprising a flow promoter.

6. Thermoplastic elastomer composition according to claim 5, wherein the flow promoter is predominantly derived from α-methylstyrene.

7. Thermoplastic elastomer composition according to claim 5 or 6, wherein the flow promoter is present in an amount from 3 to 10 weight percent.

8. Thermoplastic elastomer composition according to any one of the preceding claims further comprising an olefinic polymer.

9. Thermoplastic elastomer composition according to claim 8, wherein the olefinic polymer is present in an amount from 3 to 15% by weight.

10. Thermoplastic elastomer composition according to any one of the preceding claims wherein the hydrogenated block copolymer is a blend of a first and a second block copolymer wherein the first block copolymer is linear and has a weight average molecular weight in the range from 50,000 to 180,000 and the second block copolymer has a weight average molecular weight that is higher than the weight average molecular weight of the first block copolymer.

11. Process for the preparation of an overmoulded polar polymer shape which comprises extruding the thermoplastic elastomer composition according to any one of the preceding claims to form an extrudate; forming a shape comprising a polar polymer; and molding the extrudate onto the polar polymer to form an overmoulded polar polymer shape.

12. Overmoulded polar polymer shape comprising a first layer containing a polar polymer and a second layer overmoulded onto the first layer containing the thermoplastic elastomeric composition according to any one of the preceding claims 1-10.

13. Articles containing the overmoulded polar polymer shape according to claim 12.

## Patentansprüche

1. Thermoplastische Elastomerzusammensetzung mit guter Überformadhäsion an polare Substrate, umfassend:
ein hydriertes elastomeres Blockcopolymer mit wenigstens zwei harzartigen Endblöcken aus polymerisierter monovinylaromatischer Verbindung und einem elastomeren Mittelblock aus polymerisiertem konjugiertem Dien, worin das gewichtsmittlere Molekulargewicht des Blockcopolymers wenigstens 50.000 beträgt, bestimmt durch Gelpermeationschromatographie, die mit Polystyrolstandards geeicht ist;
einen Weichmacher; und
einen mit Styrol-Acrylnitril gepfropften Ethylen-Propylen-Dienmonomer-Kautschuk.

2. Thermoplastische Elastomerzusammensetzung nach Anspruch 1, worin die harzartigen Endblöcke polymerisiertes Styrol umfassen und der elastomere Mittelblock polymerisiertes 1,3-Butadien umfaßt, das zur Beseitigung der aliphatischen Unsättigung hydriert ist.

3. Thermoplastische Elastomerzusammensetzung nach Anspruch 1 oder 2, worin das hydrierte elastomere Blockcopolymer ein gewichtsmittleres Molekulargewicht im Bereich von 50.000 bis 500.000 aufweist.

4. Thermoplastische Elastomerzusammensetzung nach einem der vorstehenden Ansprüche, umfassend
32 bis 65 Gew.-% hydriertes elastomeres Blockcopolymer,
20 bis 45 Gew.-% Weichmacher,
5 bis 20 Gew.-% gepfropften Ethylen-Propylen-Dienmonomer-Kautschuk.

5. Thermoplastische Elastomerzusammensetzung nach einem der vorstehenden Ansprüche, die zusätzlich einen Fließpromotor umfaßt.

6. Thermoplastische Elastomerzusammensetzung nach Anspruch 5, worin der Fließpromotor vorwiegend von α-Methylstyrol abgeleitet ist.

7. Thermoplastische Elastomerzusammensetzung nach Anspruch 5 oder 6, worin der Fließpromotor in einer Menge von 3 bis 10 Gew.-% zugegen ist.

8. Thermoplastische Elastomerzusammensetzung nach einem der vorstehenden Ansprüche, die zusätzlich ein olefinisches Polymer umfaßt.

9. Thermoplastische Elastomerzusammensetzung nach Anspruch 8, worin das olefinische Polymer in einer Menge von 3 bis 15 Gew.-% zugegen ist.

10. Thermoplastische Elastomerzusammensetzung nach einem der vorstehenden Ansprüche, worin das hydrierte Blockcopolymer ein Gemisch aus einem ersten und einem zweiten Blockcopolymer ist, worin das erste Blockcopolymer linear ist und ein gewichtsmittleres Molekulargewicht im Bereich von 50.000 bis 180.000 aufweist und das zweite Blockcopolymer ein gewichtsmittleres Molekulargewicht hat, das höher ist als das gewichtsmittlere Molekulargewicht des ersten Blockcopolymers.

11. Verfahren zur Herstellung eines überformten Formgegenstandes aus polarem Polymer, das ein Extrudieren der thermoplastischen Elastomerzusammensetzung nach einem der vorstehenden Ansprüche zur Ausbildung eines Extrudats; das Ausbilden eines ein polares Polymer umfassenden Formgegenstandes; und ein Aufformen des Extrudats auf das polare Polymer zur Ausbildung eines überformten Formgegenstandes aus polarem Polymer umfaßt.

12. Überformter Formgegenstand aus polarem Polymer, umfassend eine erste Schicht mit einem Gehalt an einem polarem Polymer und eine zweite, auf die erste Schicht aufgeformte Schicht, die die thermoplastische elastomere Zusammensetzung nach einem der vorstehenden Ansprüche 1 bis 10 enthält.

13. Gegenstände, enthaltend den überformten Formgegenstand aus polarem Polymer nach Anspruch 12.

## Revendications

1. Composition d'élastomère thermoplastique ayant une bonne adhérence de surmoulage à des substrats polaires comprenant :
un copolymère bloc élastomère hydrogéné comportant au moins deux blocs d'extrémité résineux de composé monovinyl aromatique polymérisé et un bloc central élastomère de diène conjugué polymérisé, dans laquelle le poids moléculaire moyen pondéral du copolymère est d'au moins 50.000 tel que déterminé avec une chromatographie de perméation sur gel, calibrée avec des étalons de polystyrène;
un plastifiant; et
un caoutchouc d'éthylène-propylène-monomère de diène greffé avec du styrène-acrylonitrile.

2. Composition d'élastomère thermoplastique suivant la revendication 1, dans laquelle les blocs d'extrémité résineux précités comprennent du styrène polymérisé et le bloc central élastomère précité comprend du 1,3-butadiène polymérisé hydrogéné pour éliminer l'insaturation aliphatique.

3. Composition d'élastomère thermoplastique suivant l'une ou l'autre des revendications 1 et 2, dans laquelle le copolymère bloc élastomère hydrogéné a un poids moléculaire moyen pondéral allant de 50.000 à 500.000.

4. Composition d'élastomère thermoplastique suivant l'une quelconque des revendications précédentes, comprenant :
32 à 65% en poids du copolymère bloc élastomère hydrogéné;
20 à 45% en poids du plastifiant;
5 à 20% en poids du caoutchouc d'éthylène-propylène-monomère de diène greffé.

5. Composition d'élastomère thermoplastique suivant l'une quelconque des revendications précédentes, comprenant de plus un promoteur d'écoulement.

6. Composition d'élastomère thermoplastique suivant la revendication 5, dans laquelle le promoteur d'écoulement provient essentiellement d'α-méthylstyrène.

7. Composition d'élastomère thermoplastique suivant l'une ou l'autre des revendications 5 et 6, dans laquelle le promoteur d'écoulement est présent à raison de 3 à 10% en poids.

8. Composition d'élastomère thermoplastique suivant l'une quelconque des revendications précédentes, comprenant de plus un polymère oléfinique.

9. Composition d'élastomère thermoplastique suivant la revendication 8, dans laquelle le polymère oléfinique est présent à raison de 3 à 15% en poids.

10. Composition d'élastomère thermoplastique suivant l'une quelconque des revendications précédentes, dans laquelle le copolymère bloc hydrogéné est un mélange d'un premier et d'un second copolymère bloc dans lequel le premier copolymère bloc est linéaire et a un poids moléculaire moyen pondéral allant de 50.000 à 180.000 et le second copolymère bloc a un poids moléculaire moyen pondéral qui est plus élevé que le poids moléculaire moyen pondéral du premier copolymère bloc.

11. Procédé de préparation d'une pièce façonnée de polymère polaire surmoulée qui comprend l'extrusion de la composition d'élastomère thermoplastique suivant l'une quelconque des revendications précédentes, pour former un extrudat, la formation d'une pièce façonnée comprenant un polymère polaire et le moulage de l'extrudat sur le polymère polaire pour former une pièce façonnée de polymère polaire surmoulée.

12. Pièce façonnée de polymère polaire surmoulée comprenant une première couche contenant un polymère polaire et une seconde couche surmoulée sur la première couche contenant la composition élastomère thermoplastique suivant l'une quelconque des revendications 1 à 10.

13. Articles contenant la pièce façonnée de polymère polaire surmoulée suivant la revendication 12.
